# EUROPÄISCHE PATENTSCHRIFT

(11) **EP 3 133 329 B1**
(45) Veröffentlichungstag und Bekanntmachung des Hinweises auf die Patenterteilung: **24.10.2018**
(21) Anmeldenummer: 15181779.8
(22) Anmeldetag: 20.08.2015
(51) Int. Cl.: F16L 53/00, F16L 53/38, F01N 3/20, F16L 11/127

(54) **BEHEIZBARE KRAFTFAHRZEUGROHRLEITUNG UND VERFAHREN ZUR HERSTELLUNG EINER BEHEIZBAREN KRAFTFAHRZEUGROHRLEITUNG**
HEATABLE MOTOR VEHICLE TUBE AND METHOD OF MANUFACTURING SAME
CONDUITE DE VEHICULE AUTOMOBILE CHAUFFANTE ET PROCEDE DE FABRICATION D'UNE CONDUITE DE VEHICULE AUTOMOBILE CHAUFFANTE

(43) Veröffentlichungstag der Anmeldung: 22.02.2017
(73) Patentinhaber: TI Automotive (Fuldabrück) GmbH, 34277 Fuldabrück (DE)
(72) Erfinder: Weissing, Michael, 69120 Heidelberg (DE); Häckel, Andre, 34513 Waldeck (DE)
(74) Vertreter: Rohmann, Michael

(56) Entgegenhaltungen:
- WO-A1-2011/154223
- CH-A- 323 096
- DE-A1-102010 051 550
- US-A1- 2014 029 927

## Beschreibung

Die Erfindung betrifft eine beheizbare Kraftfahrzeugrohrleitung zur Durchleitung eines fluiden Mediums, insbesondere zur Durchleitung einer Harnstofflösung bzw. einer wässrigen Harnstofflösung, wobei die Rohrleitung einen Innenkanal für die Durchleitung des fluiden Mediums sowie eine den Innenkanal umgebende Rohrwandung aufweist. Weiterhin betrifft die Erfindung auch ein Verfahren zur Herstellung einer solchen beheizbaren Kraftfahrzeugrohrleitung. - Nachfolgend wird anstelle des Begriffes Kraftfahrzeugrohrleitung auch kurz der Begriff Rohrleitung verwendet.

Beheizbare Kraftfahrzeugrohrleitungen der vorstehend genannten Art sind aus der Praxis in verschiedenen Ausführungsformen bekannt. Es ist aus der Praxis insbesondere auch bekannt, solche Rohrleitungen zu beheizen bzw. elektrisch zu beheizen. In diesem Zusammenhang sind aus dem Stand der Technik insbesondere auch Rohrleitungen zur Durchleitung einer wässrigen Harnstofflösung bekannt. Eine solche wässrige Harnstofflösung wird im Rahmen eines SCR-Systems (SCR: selective catalytic reduction) eines Kraftfahrzeuges eingesetzt. In Kraftfahrzeugen, vor allem in Kraftfahrzeugen mit Dieselmotor ist häufig ein SCR-System mit einem SCR-Katalysator für die Abgasbehandlung vorhanden. Zur effektiven Reduzierung der im Abgas des Kraftfahrzeuges enthaltenen Stickoxide wird dem Abgas vor dem SCR-Katalysator die Harnstofflösung zudosiert. Eine solche wässrige Harnstofflösung hat den Nachteil, dass Harnstoff bei Temperaturen unter -11°C gefriert und teilweise auskristallisiert. Dadurch kann eine weitere funktionssichere Zufuhr der Harnstofflösung behindert oder sogar vollständig blockiert werden. Daraus resultiert die Beeinträchtigung bzw. Verhinderung einer effektiven Reduzierung der Stickoxide. Um solche Störungen zu vermeiden ist es bekannt, die Kraftfahrzeugrohrleitungen für Harnstofflösungen zu beheizen. Die Beheizung wird insbesondere mit Hilfe von elektrischen Heizdrähten durchgeführt.

Aus der Praxis ist es bekannt, einen Heizdraht auf der Außenoberfläche der Rohrleitung aufzuwickeln bzw. spulenförmig aufzuwickeln. Dieser Wickelvorgang ist zunächst relativ zeitaufwendig. Außerdem sind verhältnismäßig aufwendige Maßnahmen zur Positionierung und Fixierung der Heizdrähte erforderlich. So ist es bekannt für die Positionierung der Heizdrähte Formelemente auf der Außenoberfläche der Rohrleitung vorzusehen oder die Heizdrähte beispielsweise mit Hilfe von Klebebändern zu fixieren. Hierzu ist ein weiterer Materialaufwand und somit auch Kostenaufwand erforderlich. Oftmals ist die funktionssichere Positionierung der Heizdrähte schwierig bzw. unzureichend und aufgrund fehlerhafter Positionierung bzw. Fixierung können im Betrieb der Rohrleitung nachteilhafte Kurzschlüsse entstehen. Außerdem lässt die Effektivität der Beheizung bei den auf der Außenoberfläche aufgewickelten Heizdrähten zu wünschen übrig. Die Wärmeübertragung zum Innenkanal der Rohrleitung ist oftmals nicht zufriedenstellend. Hinzu kommt, dass auf der Außenoberfläche aufgewickelte Heizdrähte den Außendurchmesser der Rohrleitung in unerwünschter Weise erhöhen. Somit sind die bekannten Maßnahmen verbesserungsbedürftig.

US 2014/0029927 A1 offenbart eine beheizbare Kraftfahrzeugrohrleitung nach dem Oberbegriff des Anspruchs 1. Demgegenüber liegt der Erfindung das technische Problem zugrunde, eine beheizbare Kraftfahrzeugrohrleitung der eingangs genannten Art anzugeben, bei der die vorstehend beschriebenen Nachteile funktionssicher und einfach vermieden werden können. Der Erfindung liegt weiterhin das technische Problem zugrunde, ein Verfahren zur Herstellung einer solchen Kraftfahrzeugrohrleitung anzugeben.

Zur Lösung des technischen Problems lehrt die Erfindung eine beheizbare Kraftfahrzeugrohrleitung zur Durchleitung eines fluiden Mediums, insbesondere zur Durchleitung einer Harnstofflösung bzw. einer wässrigen Harnstofflösung, wobei die Rohrleitung einen Innenkanal für die Durchleitung des fluiden Mediums sowie eine den Innenkanal umgebende Rohrwandung aufweist, wobei innerhalb der Rohrwandung zumindest ein sich in Längsrichtung bzw. im Wesentlichen in Längsrichtung der Rohrleitung erstreckender Heizkanal vorgesehen ist, wobei in dem Heizkanal zumindest ein sich entlang des Heizkanals und in Längsrichtung der Rohrleitung bzw. im Wesentlichen in Längsrichtung der Rohrleitung erstreckendes Heizelement angeordnet ist und wobei das Heizelement über zumindest 60%, vorzugsweise über zumindest 75% und bevorzugt über zumindest 85% oder 90% oder 95% seines Umfanges von der Innenwandung des Heizkanals und von dem Material der Rohrwandung umgeben ist. Es liegt im Rahmen der Erfindung, dass das Heizelement über zumindest 97%, insbesondere über zumindest 98% und gemäß einer Ausführungsform über zumindest 99% oder über 100% seines Umfanges von der Innenwandung des Heizkanals und von dem Material der Rohrwandung umgeben ist. Die letztgenannte Ausführungsform mit der hundertprozentigen Umschließung wird nachfolgend noch erläutert.

Weiterhin liegt es im Rahmen der Erfindung, dass ein erfindungsgemäßer Heizkanal - abgesehen von dem darin aufgenommenen zumindest einen Heizelement - als Hohlkanal ausgebildet ist. Fernerhin liegt es im Rahmen der Erfindung, dass ein Heizkanal vollständig in der Rohrwandung aufgenommen ist und sich somit unterhalb der Außenoberfläche der Rohrwandung befindet. Es empfiehlt sich, dass ein in einem Heizkanal aufgenommenes Heizelement vollständig in der Rohrwandung aufgenommen ist und bevorzugt nicht aus der Außenoberfläche - insbesondere nicht aus einer zylinderförmigen Außenoberfläche der Rohrwandung herausragt.

Nach besonders bevorzugter Ausführungsform der Erfindung ist die den zumindest einen Heizkanal aufweisende Rohrwandung bzw. die das zumindest eine Heizelement aufnehmende Rohrwandung als einschichtige Rohrwandung ausgebildet. Zweckmäßigerweise besteht diese Rohrwandung aus ein- und demselben Kunststoff bzw. Polymermaterial, beispielsweise aus einem Polyamid. Gemäß einer anderen bevorzugten Ausführungsform ist die Rohrwandung mehrschichtig.

Ein erfindungsgemäßer Heizkanal bzw. ein erfindungsgemäßes Heizelement erstreckt sich über zumindest einen Längenbereich der Kraftfahrzeugrohrleitung. Vorzugsweise erstreckt sich der Heizkanal bzw. das Heizelement über zumindest 40%, bevorzugt über zumindest 50% und besonders bevorzugt über zumindest 60% der Länge der Rohrleitung.

Weiterhin liegt es im Rahmen der Erfindung, dass die von dem Material der Rohrwandung gebildete Innenwandung eines Heizkanals sich über zumindest 85%, vorzugsweise über zumindest 90%, bevorzugt über zumindest 95%, sehr bevorzugt über zumindest 97% und besonders bevorzugt über zumindest 98% des Innenumfangs des Heizkanals erstreckt. Nach einer Ausführungsform erstreckt sich die genannte Innenwandung über zumindest 99% des Innenumfangs des Heizkanals und entsprechend einer Ausführungsvariante über 100% des Innenumfangs des Heizkanals. - Empfohlenermaßen weist der Heizkanal einen runden, vorzugsweise einen kreisrunden oder ovalen Innenquerschnitt auf.

Erfindungsgemäß erstreckt sich der Heizkanal im Bereich der Außenoberfläche der der Rohrwandung.

Erfindungsgemäß ist in der Außenoberfläche der Rohrwandung ein sich entlang des Heizkanals erstreckender Längsschlitz vorgesehen, welcher Längsschlitz den Heizkanal bzw. das Innere / den Innenraum des Heizkanals mit der Außenoberfläche der Rohrwandung verbindet. Durch den Längsschlitz wird ein Heizkanal also gleichsam mit der Außenumgebung der Rohrwandung verbunden. Zweckmäßigerweise handelt es sich bei dem Längsschlitz um einen über die Länge des Heizkanals durchgehenden Längsschlitz.

Erfindungsgemäß ist der Längsschlitz mit der Maßgabe ausgestaltet bzw. bemessen, dass das Heizelement durch den Längsschlitz unter vorübergehender Aufweitung des Längsschlitzes in den Heizkanal einclipsbar bzw. einrastbar ist. Zweckmäßigerweise wird das Heizelement - bevorzugt in Form eines Heizdrahtes - unter Aufwendung einer Druckkraft durch den Längsschlitz in den Heizkanal eingedrückt. Vorzugsweise wird bei diesem Eindrücken der Längsschlitz aufgeweitet und nach Passieren des Heizelementes bzw. Heizdrahtes kehren die den Längsschlitz begrenzenden Rohrwandungsbereiche - bevorzugt unter Einwirkung elastischer Rückstellkräfte - in ihre Ausgangsposition bzw. im Wesentlichen in ihre Ausgangsposition zurück. Nach einer Ausführungsform liegen diese den Längsschlitz begrenzenden Rohrwandungsbereiche in ihrer Ausgangsposition aneinander an, so dass in dieser Position der Längsschlitz gleichsam verschlossen ist. Dabei ergibt sich die oben erwähnte einhundertprozentige Umschließung des Heizelementes von dem Material der Rohrwandung bzw. die einhundertprozentige Erstreckung der Innenwandung des Heizkanals über den Innenumfang des Heizkanals. Das Heizelement bzw. der Heizdraht wird somit unter Ausnutzung elastischer Rückstellkräfte der Rohrwandungsbereiche in den Heizkanal eingebracht bzw. eingedrückt. Es wurde bereits darauf hingewiesen, dass das Heizelement nach besonders empfohlener Ausführungsform der Erfindung vollständig in dem Heizkanal und in der Rohrwandung der Rohrleitung aufgenommen ist und zweckmäßigerweise nicht aus der Außenoberfläche der Rohrwandung hervorsteht. - Bei der vorstehend beschriebenen Ausführungsform mit einhundertprozentiger Umschließung ist der Längsschlitz in der Ausgangsposition verschlossen ausgebildet und kann beim Einführen des Heizelementes bzw. des Heizdrahtes entsprechend geöffnet bzw. aufgeweitet werden. Nach einer anderen Ausführungsform der Erfindung kann der Längsschlitz in seiner Ausgangsposition auch eine geringe Öffnungsweite aufweisen, insbesondere eine Öffnungsweite von 0,1 bis 3mm, vorzugweise von 0,1 bis 2mm und bevorzugt von 0,1 bis 1mm.

Es liegt im Rahmen der Erfindung, dass das Heizelement als strangförmiges Heizelement und vorzugsweise in Form zumindest eines Heizdrahtes ausgebildet ist. Es ist auch möglich, dass in einem Heizkanal eine Mehrzahl von miteinander verdrillten Heizdrähten als Heizelement aufgenommen ist. Fernerhin liegt es im Rahmen der Erfindung, dass sich der zumindest eine Heizdraht entlang des Heizkanals in Längsrichtung der Rohrleitung bzw. im Wesentlichen in Längsrichtung der Rohrleitung erstreckt.

Zweckmäßigerweise entspricht der Durchmesser D des Heizkanals 10 bis 60%, bevorzugt 15 bis 55%, sehr bevorzugt 20 bis 55% und besonders bevorzugt 25 bis 50% der Dicke d der Rohrwandung. Vorzugsweise ist der Durchmesser D des Heizkanals geringer als die Dicke d der Rohrwandung. Dabei ist empfohlenermaßen der Heizkanal in der der Außenoberfläche zugewandten Hälfte der Dicke d der Rohrwandung angeordnet. Gemäß einer bevorzugten Ausführungsvariante sind zumindest 40% der Querschnittsfläche des Heizkanals, insbesondere zumindest 50% oder zumindest 60% der Querschnittsfläche des Heizkanals in dem der Außenoberfläche zugewandten Drittel der Dicke d der Rohrwandung angeordnet.

Es liegt im Rahmen der Erfindung, dass das Heizelement bzw. der zumindest eine Heizdraht zumindest bereichsweise mit Spiel in dem Heizkanal aufgenommen ist. Dabei ist das Heizelement bzw. der Heizdraht zweckmäßigerweise über zumindest einen Teil seines Umfangs mit Spiel in dem Heizkanal aufgenommen. Es liegt fernerhin im Rahmen der Erfindung, dass das Heizelement bzw. der Heizdraht zumindest bereichsweise formschlüssig in dem Heizkanal aufgenommen ist. Zweckmäßigerweise ist das Heizelement bzw. der Heizdraht nicht stoffschlüssig und / oder nicht kraftschlüssig in dem Heizkanal aufgenommen. Insoweit unterscheidet sich die erfindungsgemäße Anordnung von Heizelement und Rohrwandung von einem in die Rohrwandung eingespritzten Heizelement bzw. Heizdraht. Vielmehr ist das Heizelement bzw. der Heizdraht nach empfohlener Ausführungsform relativ zum Heizkanal bzw. zur Innenwandung des Heizkanals verschiebbar in dem Heizkanal angeordnet. Grundsätzlich könnte man also nach empfohlener Ausführungsform der Erfindung das Heizelement bzw. den Heizdraht durch den Heizkanal ziehen bzw. auch aus dem Heizkanal wieder herausziehen. Andererseits vermeidet der vorzugsweise enge bzw. geschlossene Längsschlitz ein Herausgleiten bzw. Herausfallen des Heizelementes aus dem zugeordneten Heizkanal. Gemäß einer alternativen Ausführungsform ist das Heizelement spielfrei in dem Heizkanal aufgenommen. Zweckmäßigerweise ist das Heizelement ein leitfähiges Polymer.

Eine sehr bevorzugte Ausführungsform der Erfindung ist dadurch gekennzeichnet, dass sich der Heizkanal und bevorzugt das im Heizkanal aufgenommene Heizelement parallel bzw. im Wesentlichen parallel zur Längsachse L der Rohrleitung erstreckt. Nach einer anderen Ausführungsvariante kann sich ein Heizkanal mit dem darin aufgenommenen Heizelement bzw. Heizdraht auch wellenförmig bzw. mäanderförmig entlang der Länge der Rohrwandung erstrecken. Eine Ausführungsform der Erfindung zeichnet sich dadurch aus, dass der Heizkanal und bevorzugt auch das im Heizkanal aufgenommene Heizelement wendelförmig in der Rohrleitung angeordnet ist. Nichtsdestoweniger erstreckt sich der Heizkanal und das darin aufgenommene Heizelement zugleich in Längsrichtung der Rohrleitung.

Eine sehr empfohlene Ausführungsform der Erfindung ist dadurch gekennzeichnet, dass zumindest zwei Heizkanäle, vorzugsweise zwei Heizkanäle vorgesehen sind und dass in jedem Heizkanal zumindest ein Heizelement, vorzugsweise ein Heizelement bzw. ein Heizdraht angeordnet ist. Empfohlenermaßen sind die zumindest zwei Heizkanäle und bevorzugt die darin aufgenommenen Heizelemente / Heizdrähte parallel zueinander bzw. im Wesentlichen parallel zueinander angeordnet.

Nach einer Ausführungsform der Erfindung weist die Rohrleitung neben der beschriebenen Rohrwandung zumindest eine die Rohrwandung - zweckmäßigerweise mit Abstand - umgebende Ummantelung bzw. Schutzummantelung auf. Bei dieser Schutzummantelung kann es sich beispielsweise um ein die Rohrwandung mit dem Innenkanal umgebendes Wellrohr handeln.

Zur Lösung des technischen Problems lehrt die Erfindung weiterhin ein Verfahren gemäß Anspruch 9 zur Herstellung einer beheizbaren Kraftfahrzeugrohrleitung, wobei die Rohrleitung mit einer Rohrwandung und einem von der Rohrwandung umgebenem Innenkanal sowie mit zumindest einem in der Rohrwandung integrierten Heizkanal erzeugt wird und wobei im Anschluss daran zumindest ein Heizelement - vorzugsweise zumindest ein Heizdraht - durch die Außenoberfläche der Rohrwandung in den Heizkanal eingebracht wird. - Erfindungsgemäß wird die Rohrleitung mit der Rohrwandung und dem darin integrierten Heizkanal durch Extrusion zumindest eines Kunststoffes, vorzugsweise eines Kunststoffes erzeugt. Erfindungsgemäß erfolgt die Erzeugung bzw. die Extrusion der Rohrwandung mit der Maßgabe, dass ein in die Rohrwandung integrierter Heizkanal über einen Längsschlitz mit der Außenoberfläche der Rohrwandung in Verbindung steht. Dabei erstreckt sich der Längsschlitz zweckmäßigerweise über die Länge des Heizkanals in Längsrichtung der Rohrleitung.

Beim erfindungsgemäßen Verfahren wird ein Heizelement - vorzugsweise ein Heizdraht - durch den Längsschlitz in den zugeordneten Heizkanal eingeclipst bzw. eingerastet. Zweckmäßigerweise wird das Heizelement bzw. der Heizdraht entlang des Längsschlitzes unter Aufbringung einer radialen Druckkraft in den Längsschlitz eingedrückt. Dabei wird vorzugsweise das den Längsschlitz begrenzende Rohrwandungsmaterial zur Seite bewegt bzw. gedrückt, so dass der Längsschlitz zumindest vorrübergehend aufgeweitet wird und das Heizelement bzw. der Heizdraht in den Heizkanal eingebracht werden kann. Zweckmäßigerweise kehrt das den Längsschlitz begrenzende Rohrwandungsmaterial nach dem Einbringen bzw. Eindrücken des Heizelementes / Heizdrahtes in seine Ausgangsposition bzw. im Wesentlichen in seine Ausgangsposition zurück und zwar empfohlenermaßen unter Einwirkung elastischer Rückstellkräfte. Das eingebrachte Heizelement bzw. der eingebrachte Heizdraht erstreckt sich dann entlang des Heizkanals und zweckmäßigerweise entlang des an dem Heizkanal vorgesehenen Längsschlitzes. Es liegt im Rahmen der Erfindung, dass der Längsschlitz wie auch der zugeordnete Heizkanal bei einer Extrusion der Rohrwandung der Rohrleitung erzeugt wird.

Der Erfindung liegt die Erkenntnis zugrunde, dass bei der erfindungsgemäßen beheizbaren Kraftfahrzeugrohrleitung eine einfache und wenig aufwendige Einbringung bzw. Anbringung eines Heizelementes möglich ist. Gegenüber dem aus dem Stand der Technik bekannten spulenförmigen Aufwickeln eines Heizdrahtes entfallen aufwendige Maßnahmen zur Positionierung und Fixierung des Heizdrahtes. Mit den erfindungsgemäßen Maßnahmen, insbesondere mit einem erfindungsgemäßen Heizkanal kann eine sehr funktionssichere Positionierung und Fixierung des Heizelementes erreicht werden. Kurzschlüsse zwischen Heizdrahtabschnitten können vollständig vermieden werden. Im Übrigen ermöglicht die erfindungsgemäße Kraftfahrzeugrohrleitung auch eine sehr effektive Beheizung des Innenkanals und die Wärmeübertragung von einem in einem erfindungsgemäßen Heizkanal aufgenommenen Heizelement zum Innenkanal ist einfach und problemlos möglich. Hervorzuheben ist auch, dass eine erfindungsgemäße beheizbare Kraftfahrzeugrohrleitung auf einfache, wenig aufwendige und vor allem kostengünstige Weise herstellbar ist. Eine besonders einfache und kostengünstige Herstellung ergibt sich bei der Extrusion einer Rohrwandung der erfindungsgemäßen Rohrleitung mit dem integrierten Heizkanal und vorzugsweise mit an dem Heizkanal vorgesehenem Längsschlitz. Im Ergebnis zeichnet sich die Erfindung durch Einfachheit, geringen Aufwand und geringe Kosten aus.

Nachfolgend wird die Erfindung anhand einer lediglich ein Ausführungsbeispiel darstellenden Zeichnung näher erläutert. Es zeigen in schematischer Darstellung:
- Fig. 1: eine perspektivische Ansicht einer erfindungsgemäßen beheizbaren Kraftfahrzeugrohrleitung,
- Fig. 2: einen Schnitt durch den Gegenstand gemäß Fig. 1 und
- Fig. 3a bis c: schematisch eine Verfahrensschrittfolge des erfindungsgemäßen Verfahrens zur Herstellung der Kraftfahrzeugrohrleitung.

Die Figuren zeigen eine erfindungsgemäße Kraftfahrzeugrohrleitung 1 zur Durchleitung eines nicht dargestellten fluiden Mediums, insbesondere zur Durchleitung einer wässrigen Harnstofflösung. Die Rohrleitung 1 weist einen Innenkanal 2 für die Durchleitung des fluiden Mediums sowie eine den Innenkanal 2 umgebende Rohrwandung 3 auf. Innerhalb der Rohrwandung 3 sind im Ausführungsbeispiel zwei sich in Längsrichtung der Rohrleitung 1 erstreckende Heizkanäle 4 vorgesehen. In jedem Heizkanal 4 ist empfohlenermaßen und im Ausführungsbeispiel ein sich entlang des Heizkanals 4 und sich in Längsrichtung der Rohrleitung 1 erstreckendes Heizelement 5 angeordnet. Dabei sind die Heizelemente 5 bevorzugt und im Ausführungsbeispiel jeweils als Heizdraht ausgebildet. Jedes Heizelement 5 bzw. jeder Heizdraht ist vorzugsweise und im Ausführungsbeispiel über mehr als 95% seines Umfanges von der Innenwandung 6 des jeweils zugeordneten Heizkanals 4 bzw. von dem Material der Rohrwandung 3 umgeben und die von dem Material der Rohrwandung 3 gebildete Innenwandung 6 des Heizkanals 4 erstreckt sich über zumindest 95% des Innenumfangs des Heizkanals 4. Ein Heizelement 5 bzw. ein Heizdraht erstreckt sich somit bevorzugt in Längsrichtung des zugeordneten Heizkanals 4 und in Längsrichtung des Innenkanals 2 der Rohrleitung 1.

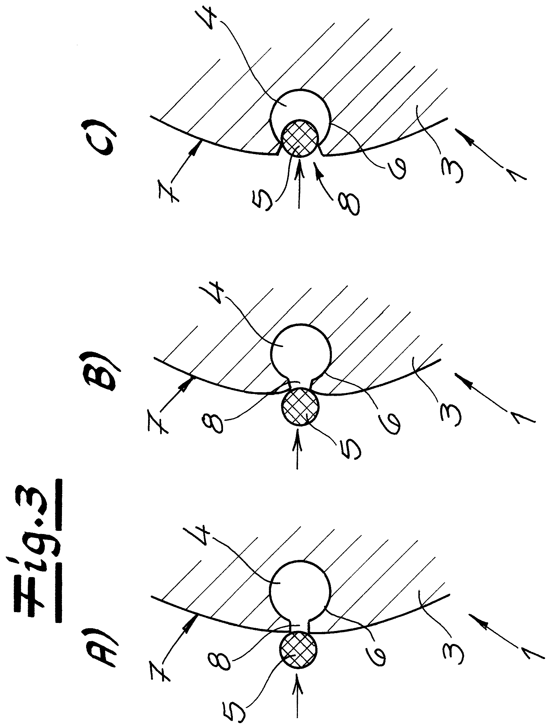

Bevorzugt und im Ausführungsbeispiel ist ein erfindungsgemäßer Heizkanal 4 im Querschnitt rund bzw. kreisrund ausgebildet. Es empfiehlt sich, dass sich jeder Heizkanal 4 - wie im Ausführungsbeispiel nach den Figuren - im Bereich der Außenoberfläche 7 der Rohrwandung 3 entlang der Rohrleitung 1 erstreckt. Im Ausführungsbeispiel ist in der Außenoberfläche 7 der Rohrwandung 3 ein sich entlang eines Heizkanals 4 erstreckender Längsschlitz 8 vorgesehen, welcher Längsschlitz 8 den Heizkanal 4 bzw. den Innenraum des Heizkanals 4 mit der Außenoberfläche 7 der Rohrwandung 3 verbindet. Ein solcher Längsschlitz 8 verbindet somit einen Heizkanal 4 mit der Außenumgebung der Rohrwandung 3. Der Längsschlitz 8 ist zweckmäßigerweise mit der Maßgabe ausgestaltet bzw. bemessen, dass das Heizelement 5 bzw. der Heizdraht durch den Längsschlitz 8 und zwar bevorzugt und im Ausführungsbeispiel (siehe Fig. 3) unter vorrübergehender Aufweitung des Längsschlitzes 8 in den Heizkanal 4 eindrückbar bzw. einclipsbar ist. Diese Ausführungsform der Erfindung hat sich besonders bewährt.

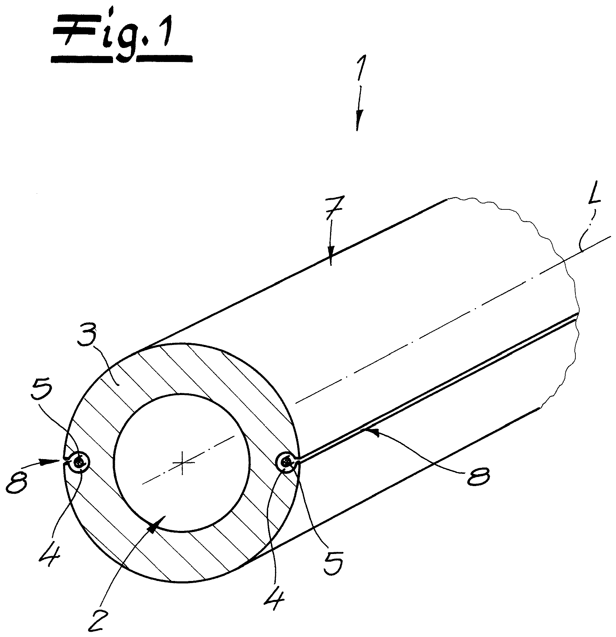

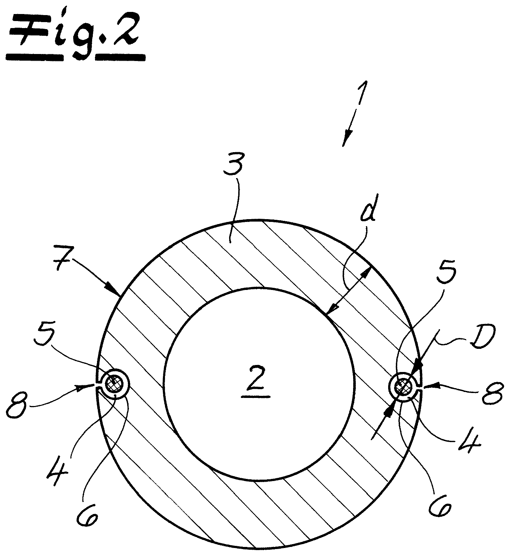

Wie in der Fig. 3 dargestellt wird ein Heizelement 5 bzw. ein Heizdraht an die Außenoberfläche 7 der Rohrleitung 1 herangeführt und dann durch den Längsschlitz 8 in den zugeordneten Heizkanal 4 eingedrückt. Dabei werden die den Längsschlitz 8 begrenzenden Rohrwandungsbereiche beim Eindrücken des Heizelementes 5 zunächst etwas nach innen in Richtung des Heizkanals 4 gedrückt (siehe Fig. 3b) und im Anschluss daran wird der Längsschlitz 8 durch Verschiebung dieser Rohrwandungsbereiche aufgeweitet (Fig. 3c). Zweckmäßigerweise unter Einwirkung elastischer Rückstellkräfte kehren dann die betroffenen Rohrwandungsbereiche in ihre Ausgangsposition zurück, so dass der in den Fig. 1 und 2 dargestellte Zustand erreicht wird. Dann ist das Heizelement 5 bzw. der Heizdraht vollständig in dem zugeordneten Heizkanal 4 der Rohrwandung 3 aufgenommen. Es liegt im Rahmen der Erfindung, dass das in dem Heizkanal 4 aufgenommene Heizelement 5 nicht über die Außenoberfläche 7 der Rohrwandung 3 hervorsteht.

Zweckmäßigerweise und im Ausführungsbeispiel beträgt der Durchmesser D eines Heizkanals 4 weniger als 50% der Dicke d der Rohrwandung 3. Es liegt im Rahmen der Erfindung, dass das Heizelement 5 bzw. der Heizdraht zumindest bereichsweise mit Spiel in dem Heizkanal 4 aufgenommen ist. - Nach einer bevorzugten Ausführungsform und im Ausführungsbeispiel erstreckt sich ein Heizkanal 4 und bevorzugt auch das im Heizkanal 4 aufgenommene Heizelement 5 parallel zur Längsachse L der Rohrleitung 1. Im Ausführungsbeispiel sind zwei solcher Heizkanäle 4 mit jeweils aufgenommenem Heizelement 5 vorgesehen.

## Patentansprüche

1. Beheizbare Kraftfahrzeugrohrleitung (1) zur Durchleitung eines fluiden Mediums, insbesondere zur Durchleitung einer Harnstofflösung bzw. einer wässrigen Harnstofflösung, wobei die Rohrleitung (1) einen Innenkanal (2) für die Durchleitung des fluiden Mediums sowie eine den Innenkanal umgebende Rohrwandung (3) aufweist, wobei innerhalb der Rohrwandung (3) zumindest ein sich in Längsrichtung bzw. im Wesentlichen in Längsrichtung der Rohrleitung (1) erstreckender Heizkanal (4) vorgesehen ist, wobei in dem Heizkanal (4) zumindest ein sich entlang des Heizkanals (4) erstreckendes Heizelement (5) angeordnet ist, wobei das Heizelement (5) über zumindest 85%, vorzugsweise über zumindest 90% und bevorzugt über zumindest 95% seines Umfanges von der Innenwandung (6) des Heizkanals (4) und von dem Material der Rohrwandung (3) umgeben ist, wobei der Heizkanal (4) sich im Bereich der Außenoberfläche (7) der Rohrwandung (3) erstreckt, wobei in der Außenoberfläche (7) der Rohrwandung (3) ein sich entlang des Heizkanals (4) erstreckender Längsschlitz (8) vorgesehen ist, welcher Längsschlitz (8) den Heizkanal (4) mit der Außenoberfläche (7) der Rohrwandung (3) verbindet,
wobei das Heizelement (5) zumindest bereichsweise mit Spiel in dem Heizkanal (4) aufgenommen ist,
**dadurch gekennzeichnet, dass** der Längsschlitz (8) mit der Maßgabe ausgestaltet und bemessen ist, dass das Heizelement (5) durch den Längsschlitz (8) unter vorübergehender Aufweitung des Längsschlitzes (8) und unter Ausnutzung elastischer Rückstellkräfte der den Längsschlitz (8) begrenzenden Rohrwandungsbereiche in den Heizkanal (4) einclipsbar bzw. einrastbar ist.

2. Beheizbare Kraftfahrzeugrohrleitung nach Anspruch 1, **dadurch gekennzeichnet, dass** die von dem Material der Rohrwandung (3) gebildete Innenwandung (6) des Heizkanals (4) sich über zumindest 60%, vorzugsweise über zumindest 75%, bevorzugt über zumindest 85% oder 90% oder 95% und sehr bevorzugt über zumindest 97% des Innenumfangs des Heizkanals (4) erstreckt.

3. Beheizbare Kraftfahrzeugrohrleitung nach einem der Ansprüche 1 oder 2, **dadurch gekennzeichnet, dass** das Heizelement (5) als strangförmiges Heizelement (5) und vorzugsweise in Form zumindest eines Heizdrahtes ausgebildet ist.

4. Beheizbare Kraftfahrzeugrohrleitung nach einem der Ansprüche 1 bis 3, **dadurch gekennzeichnet, dass** der Durchmesser D des Heizkanals (4) 10 bis 60%, bevorzugt 20 bis 55% und besonders bevorzugt 25 bis 50% der Dicke d der Rohrwandung (3) entspricht.

5. Beheizbare Kraftfahrzeugrohrleitung nach einem der Ansprüche 1 bis 4, **dadurch gekennzeichnet, dass** sich der Heizkanal (4) und bevorzugt auch das im Heizkanal (4) aufgenommene Heizelement (5) parallel bzw. im Wesentlichen parallel zur Längsachse L der Rohrleitung (1) erstreckt.

6. Beheizbare Kraftfahrzeugrohrleitung nach einem der Ansprüche 1 bis 4, **dadurch gekennzeichnet, dass** der Heizkanal (4) und bevorzugt auch das im Heizkanal (4) aufgenommene Heizelement (5) wendelförmig in der Rohrwandung (3) angeordnet ist.

7. Beheizbare Kraftfahrzeugrohrleitung nach einem der Ansprüche 1 bis 6, **dadurch gekennzeichnet, dass** zumindest zwei Heizkanäle (4), vorzugsweise zwei Heizkanäle (4) vorgesehen sind und dass in jedem Heizkanal (4) zumindest ein Heizelement (5), vorzugsweise ein Heizelement (5) angeordnet ist.

8. Beheizbare Kraftfahrzeugrohrleitung nach Anspruch 7, **dadurch gekennzeichnet, dass** die zumindest zwei Heizkanäle (4) und bevorzugt die darin aufgenommenen Heizelemente (5) parallel zueinander bzw. im Wesentlichen parallel zueinander angeordnet sind.

9. Verfahren zur Herstellung einer beheizbaren Kraftfahrzeugrohrleitung nach einem der Ansprüche 1 bis 8, wobei zunächst die Rohrwandung (3) mit dem von der Rohrwandung (3) umgebenen Innenkanal (2) sowie mit zumindest einem in die Rohrwandung (3) integrierten Heizkanal (4) erzeugt wird und wobei im Anschluss daran zumindest ein Heizelement (5) - vorzugsweise zumindest ein Heizdraht - durch die Außenoberfläche (7) der Rohrwandung (3) in den Heizkanal (4) eingebracht bzw. eingedrückt wird, wobei das Heizelement (5) zumindest bereichsweise mit Spiel in dem Heizkanal (4) aufgenommen wird, wobei die Rohrwandung (3) mit dem darin integrierten zumindest einen Heizkanal (4) durch Extrusion zumindest eines Kunststoffes erzeugt wird, wobei die Erzeugung bzw. die Extrusion der Rohrwandung (3) mit der Maßgabe erfolgt, dass ein in die Rohrwandung (3) integrierter Heizkanal (4) über einen Längsschlitz (8) mit der Außenoberfläche (7) der Rohrwandung (3) in Verbindung steht,
**dadurch gekennzeichnet dass** das Heizelement (5) - vorzugsweise der Heizdraht - durch den Längsschlitz (8) unter vorübergehender Aufweitung des Längsschlitzes (8) und unter Ausnutzung elastischer Rückstellkräfte der den Längsschlitz (8) begrenzenden Rohrwandungsbereiche in den Heizkanal eingeclipst bzw. eingerastet wird.

## Claims

1. A heatable motor vehicle pipe (1) for guiding through a fluid medium, in particular for guiding through a urea solution or an aqueous urea solution, wherein the pipe (1) has an inner channel (2) for guiding through the fluid medium, as well as a pipe wall (3) surrounding the inner channel, wherein at least one heating channel (4) extending in the longitudinal direction or essentially in the longitudinal direction of the pipe (1) is provided inside the pipe wall (3), wherein at least one heating element (5) extending along the heating channel (4) is arranged in the heating channel (4), wherein the heating element (5) is surrounded over at least 85%, particularly over at least 90%, and preferably over at least 95% of its periphery by the inner wall (6) of the heating channel (4) and by the material of the pipe wall (3), wherein the heating channel extends in the area of the outer surface (7) of the wall pipe wall (3), wherein a longitudinal slit (8) extending along the heating channel (4) is provided in the outer surface (7) of the pipe wall (3), with the longitudinal slit (8) connecting the heating channel (4) with the outer surface (7) of the pipe wall (3), wherein at least areas of the heating element (5) are accommodated in the heating channel (4) with clearance, **characterized in that** the longitudinal slit (8) is configured and dimensioned subject to the condition that the heating element (5) can be clipped or latched into the heating channel (4) through the longitudinal slit (8) while temporarily expanding the longitudinal slit (8) and utilizing elastic restoring forces of the pipe areas bordering the longitudinal slit (8).

2. The heatable motor vehicle pipe (1) according to claim 1, **characterized in that** the inner wall (6) of the heating channel (4) formed by the material of the pipe wall (3) extends over at least 60%, particularly over at least 75%, preferably over at least 85% or 90% or 95%, and especially preferably over at least 97% of the inner periphery of the heating channel (4).

3. The heatable motor vehicle pipe (1) according to one of claims 1 or 2, **characterized in that** the heating element (5) is designed as a stringy heating element (5), and particularly in the form of at least one heating wire.

4. The heatable motor vehicle pipe according to one of claims 1 to 3, **characterized in that** the diameter D of the heating channel (4) corresponds to 10 to 60%, preferably 20 to 55%, and especially preferably 25 to 50% of the thickness d of the pipe wall (3).

5. The heatable motor vehicle pipe according to one of claims 1 to 4, **characterized in that** the heating channel (4) and preferably also the heating element (5) incorporated into the heating channel (4) extends parallel or essentially parallel to the longitudinal axis L of the pipe (1).

6. The heatable motor vehicle pipe according to one of claims 1 to 4, **characterized in that** the heating channel (4) and preferably also the heating element (5) incorporated into the heating channel (4) is helically arranged in the pipe wall (3).

7. The heatable motor vehicle pipe according to one of claims 1 to 6, **characterized in that** at least two heating channels (4), particularly two heating channels (4), are provided, and that at least one heating element (5), particularly one heating element (5), is arranged in each heating channel (4).

8. The heatable motor vehicle pipe according to claim 7, **characterized in that** the at least two heating channels (4), and preferably the heating elements (5) incorporated therein, are arranged parallel to each other or essentially parallel to each other.

9. A method for manufacturing a heatable motor vehicle pipe according to one of claims 1 to 8, wherein the pipe wall (3) with the inner channel (2) surrounded by the pipe wall (3) as well as with the at least one heating channel (4) integrated into the pipe wall (3) is initially generated, and wherein at least one heating element (5)-particularly at least one heating wire-is then introduced or pressed into the heating channel (4) through the outer surface (7) of the pipe wall (3), wherein at least areas of the heating element (5) are accommodated in the heating channel (4) with clearance, wherein the pipe wall (3) with the at least one heating channel (4) integrated therein is generated by extruding at least one plastic, wherein the pipe wall (3) is generated or extruded subject to the provision that a heating channel (4) integrated into the pipe wall (3) is connected with the outer surface (7) of the pipe wall (3) by a longitudinal slit (8), **characterized in that** the heating element (5)-particularly the heating wire-is clipped or latched into the heating channel through the longitudinal slit (8) while temporarily expanding the longitudinal slit (8) and utilizing elastic restoring forces of the pipe wall areas bordering the longitudinal slit (8).

## Revendications

1. Conduite pour véhicule automobile pouvant être chauffée (1) pour faire passer un milieu fluide, notamment pour faire passer une solution d'urée ou une solution d'urée aqueuse, la conduite (1) comprenant un conduit intérieur (2) pour faire passer le milieu fluide ainsi qu'une paroi tubulaire (3) entourant le conduit intérieur, à l'intérieur de la paroi tubulaire (3) au moins un conduit chauffant (4) s'étendant dans le sens longitudinal ou pour l'essentiel dans le sens longitudinal de la conduite (1) étant prévu, au moins un élément chauffant (5) s'étendant le long du conduit chauffant (4) étant disposé dans le conduit chauffant (4), l'élément chauffant (5) étant entouré sur au moins 85%, de préférence sur au moins 90% et de préférence sur au moins 95% de sa périphérie par la paroi intérieure (6) du conduit chauffant (4) et par le matériau de la paroi tubulaire (3), le conduit chauffant (4) s'étendant dans la zone de la surface extérieure (7) de la paroi tubulaire (3), dans la surface extérieure (7) de la paroi tubulaire (3) une fente longitudinale (8) étant prévue s'étendant le long du conduit chauffant (4), laquelle fente longitudinale (8) reliant le conduit chauffant (4) à la surface extérieure (7) de la paroi tubulaire (3), l'élément chauffant (5) étant logé avec du jeu au moins par zones dans le conduit chauffant (4), **caractérisée en ce que** la fente longitudinale (8) est conçue et dimensionnée de sorte que l'élément chauffant (5) est clipsable ou encliquetable dans le conduit chauffant (4) par la fente longitudinale (8) en élargissant provisoirement la fente longitudinale (8) et en utilisant une force de rappel élastique zones de paroi tubulaire délimitant la fente longitudinale (8).

2. Conduite pour véhicule automobile pouvant être chauffée selon la revendication 1, **caractérisée en ce que** la paroi intérieure (6) du conduit chauffant (4) formée par le matériau de la paroi tubulaire (3) s'étend sur au moins 60%, de préférence sur au moins 75%, de préférence sur au moins 85% ou 90% ou 95% et de façon très préférée sur au moins 97% de la périphérie intérieure du conduit chauffant (4).

3. Conduite pour véhicule automobile pouvant être chauffée selon l'une quelconque des revendications 1 ou 2, **caractérisée en ce que** l'élément chauffant (5) est constitué comme élément chauffant en forme de cordon (5) et de préférence sous la forme d'au moins un fil chauffant.

4. Conduite pour véhicule automobile pouvant être chauffée selon l'une quelconque des revendications 1 à 3, **caractérisée en ce que** le diamètre D du conduit chauffant (4) correspond à 10 à 60%, de préférence 20 à 55% et de façon particulièrement préférée de 25 à 50% à l'épaisseur d de la paroi tubulaire (3).

5. Conduite pour véhicule automobile pouvant être chauffée selon l'une quelconque des revendications 1 à 4, **caractérisée en ce que** le conduit chauffant (4) et de préférence également l'élément chauffant (5) logé dans le conduit chauffant (4) s'étend parallèlement ou pour l'essentiel de façon parallèle à l'axe longitudinal L de la conduite (1).

6. Conduite pour véhicule automobile pouvant être chauffée selon l'une quelconque des revendications 1 à 4, **caractérisée en ce que** le conduit chauffant (4) et de préférence également l'élément chauffant (5) logé dans le conduit chauffant (4) est disposé en forme de spirale dans la paroi tubulaire (3).

7. Conduite pour véhicule automobile pouvant être chauffée selon l'une quelconque des revendications 1 à 6, **caractérisée en ce qu'**au moins deux conduits chauffants (4), de préférence deux conduits chauffants (4) sont prévus et **en ce que** dans chaque conduit chauffant (4) est disposé au moins un élément chauffant (5), de préférence un élément chauffant (5).

8. Conduite pour véhicule automobile pouvant être chauffée selon la revendication 7, **caractérisée en ce qu'**au moins deux conduits chauffants (4) et de préférence les éléments chauffants (5) logés dedans sont disposés parallèlement l'un à l'autre ou pour l'essentiel parallèles l'un par rapport à l'autre.

9. Procédé pour la fabrication d'une conduite pour véhicule automobile pouvant être chauffée selon l'une quelconque des revendications 1 à 8, la paroi tubulaire (3) étant d'abord produite avec le conduit intérieur (2) entourant la paroi tubulaire (3) ainsi qu'avec au moins un conduit chauffant (4) intégré dans la paroi tubulaire (3) et à la suite de quoi au moins un élément chauffant (5) (de préférence au moins un fil chauffant) étant introduit ou enfoncé dans le conduit chauffant (4) par la surface extérieure (7) de la paroi tubulaire (3), l'élément chauffant (5) étant logé au moins par zones avec du jeu dans le conduit chauffant (4), la paroi tubulaire (3) avec au moins un conduit chauffant (4) intégré dedans étant produite par extrusion au moins d'une matière plastique, la production ou l'extrusion de la paroi tubulaire (3) ayant lieu à condition qu'un conduit chauffant (4) intégré dans la paroi tubulaire (3) soit en liaison sur une fente longitudinale (8) avec la surface extérieure (7) de la paroi tubulaire (3), **caractérisée en ce que** l'élément chauffant (5), (de préférence le fil chauffant), est clipsé ou encliqueté dans le conduit chauffant par la fente longitudinale (8) en élargissant provisoirement la fente longitudinale (8) et en utilisant une force de rappel élastique des zones de paroi tubulaire délimitant la fente longitudinale (8).
